# EUROPEAN PATENT APPLICATION

(11) **EP 2 693 026 A1**
(43) Date of publication of application: **05.02.2014**
(21) Application number: 12178647.9
(22) Date of filing: 31.07.2012
(51) Int. Cl.: F02D 41/02

(54) **Exhaust gas treatment system (ATS) for internal combustion engine**

(71) Applicant: FPT Industrial S.p.A., 10156 Torino (IT)
(72) Inventor: Cerciello, Giovanni, 10139 TORINO (IT); Torbati, Reza, 10034 CHIVASSO (IT); Aimar, Bruno, 12020 CARTIGNANO (IT)
(74) Representative: Fiume, Orazio

(57) **Abstract**

Exhaust gas treatment system (ATS) for internal combustion engine, the system being based on an particulate filter (F) unable to retain all the particulate matter, the treatment system comprising a catalyst (C) of the DOC type upstream of the filter (F) according to a direction of the exhaust gas outflow (EG) and means for controlling the injection (ECU) in order to control a predetermined stoichiometric ratio (lambda) of air/fuel, wherein the injection control means (ECU) comprise means for promoting an enrichment of the stoichiometric ration in order to provoke an active regeneration of the particulate matter filter and means for limiting such enrichment, during the active regeneration procedure, acting as a function of a power/torque required to the internal combustion engine.

## Description

### Application field of the invention

The present invention refers to the field of exhaust gas treatment lines (ATS: After Treatment Systems) of the type based on PM-CAT filters.

### Description of the prior art

Off-road vehicles usually use filters of the type known as PM-CAT or also POC (Particulate Oxidation Catalyst) in order to capture the carbonaceous particulate matter.

Such PM-CAT filters, unlike the DPF filters (Diesel particulate filter), are open filters, in the sense that the alveoli made in the body of the filter are open and allow the passage of the gases in any saturation condition of the filter itself. The particulate matter is actually filtered by centrifugation, which causes the particulate matter to collide with and to settle within the porous walls of the alveoli, where it gets trapped.

The filtering power of PM-CAT filters is between 50% and 90%, thus they are to able to retain all the particulate matter. Generally, both the PM-CAT and the DPF filters are coupled with a DOC (Diesel Oxidation Catalyst), which is arranged upstream of the respective filter and promotes the production of NO₂, in order to facilitate a natural reaction of the first type, namely promoting the reaction of the carbonaceous soot with the NO₂ in order to generate CO/CO2 according to the reaction

C + NO₂ -> NO + CO/CO₂

Such reaction is said to occur naturally or passively when the filter reaches an interval of temperatures comprised between 220°C and 450°C approximately. This depends on the operating conditions of the heat engine. Thus such regeneration is called low temperature passive regeneration of the first type.

A high temperature passive or natural regeneration is also known, and occurs when the filter reaches temperatures exceeding 550°C. Such natural regeneration of the second type is very rare.

PM-CAT filters may be provided as part of the original equipment or they can be bought aftermarket and installed on the vehicle, since such devices do not affect the management devices of the heat engine.

DPF filters are closed filters, they completely filter the exhaust gases and they tend to clog due to the saturation of particulate matter, in spite of the presence of such passive regeneration process.

Thus, high temperature active regeneration cycles, with temperatures from 560°C and an average value of 650°C, are commanded and managed by a control unit, in order to promote a reaction of the second type, this time being active, namely generating CO/CO₂ from the reaction of the accumulated carbonaceous soot C with the oxygen O₂, thus freeing the DPF filter and allowing the engine apparatus/exhaust line (ATS) to restore its original performance.

The typical reaction of the second type, both active or passive is the following:

C + O₂ -> CO/CO₂

DPF filters cannot be installed aftermarket on vehicles that are not equipped with them originally, since they cannot manage the active regeneration cycles.

Type-approval cycles performed by type-approval Authorities include the test of the functioning of the heat engine according to predefined engine speed/power/time curves.

When the quantity of particulate matter released in the environment, and of the other pollutants being subject to regulations, is lower than an acceptance threshold, the engine apparatus/exhaust line passes the type approval tests. Type-approval cycles and emission limits change according to the type of vehicle. The actual operating conditions of the vehicle may be very different from the type-approval cycles conditions. In certain circumstances, the vehicles originally equipped with PM-CAT filters may be used in a way different from the type-approval curves, thus the filters can be completely saturated and the particulate matter produced by the heat engine will be almost totally released in the environment.

Another problem that may occur is called "blow off", wherein at certain temperatures and with some very high levels of filter saturation, high flow rates of exhaust gases may carry away the soot on the walls of the alveoli, releasing it in the environment.

Furthermore, after an excessive accumulation of soot, it may happen that the engine is brought to heat the PM-CAT filter up to promote an uncontrolled reaction of the second type, reaching and exceeding 900°C and provoking irreversible damages to the filter. A case is known when the vehicle itself took fire provoking serious damages to itself and to the surrounding environment, affecting a vast geographical area.

According to the prior art, in order to overcome such drawbacks, diagnosis systems detecting the saturation level of the PM-CAT filters are adopted. An example of such systems is given in W02012082268.

### Summary of the invention

Therefore, a first aim of the present invention is to reduce the manufacturing and installation costs of exhaust gas treatment systems (ATS).

Another aim of the present invention is to prolong the service life of the open filters, without superficial treatments.

A further aim of the present invention is to improve the exhaust gas treatment systems based on PM-CAT filters, so that they can be more efficient, safer, and even suitable to very low-power work cycles.

Another aim of the present invention is to provide a system allowing the regeneration of those filters that are unable to retain all the particulate matter, namely the open filters.

These and further aims are reached by means of an exhaust gas treatment system (ATS) according to claim 1.

Advantageously, thanks to the present invention, the service life of PM-CAT filters is prolonged and their functioning is more constant and reliable in time, to the point that the treatment systems based on such filters are suitable to be installed on all vehicle categories.

In other words, thanks to the present invention, PM-CAT filters may used also in fields where only DPF filters have been used so far.

Given the remarkable differences between the costs of PM-CAT filters and DPF filters, the saving is very high.

It is also object of the present invention an exhaust gas treatment method.

It is also object of the present invention an internal combustion engine comprising the aforementioned exhaust gas treatment system and a vehicle comprising such engine.

Further details and characteristics of the invention will be described below, also with the help of the claims which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 schematically shows a catalyst-filter system according to the present invention,
figure 2 schematically shows an ATS system according to the present invention, which integrates the catalyst-filter system shown in figure 1.

In the figures the same reference numbers and letters identify the same elements or components.

### Detailed description of preferred embodiments of the invention

The system that is object of the present invention provides the active regeneration of PM-CAT filters similarly to what happens for DPF filters. The active regeneration may be a process per se known, which includes, for example, the post-injection of additional fuel during some specific strokes of the engine, so that the fuel burns in the exhaust gas treatment system rather than in the cylinders, promoting an active reaction of the second type, namely the oxidation of the carbon residues by means of oxygen.

In the following, the expression "to induce an active regeneration" will mean to increase the temperature of the ATS by fuel post-injection techniques or the like, namely independently of the work point and of the work conditions of the internal combustion engine.

In the following the expression "filter unable to retain all the particular matter" will refer to any particular filter different from DPF.

Such procedure is known for DPF filters, but is absolutely unknown in the field of PM-CAT filters.

The reasons of such discrimination towards the PM-CAT filters are described in detail below.

The regeneration temperature of any filter depends also on the amount of particulate matter accumulated in the filter. Thus, the application on PM-CAT filters of the same regeneration techniques as DPF filters for the same filter saturation percentage will cause an excessive increase of the temperatures reached during the regeneration process, which would damage the PM-CAT filters.

Thus it has been estimated that acceptable active regeneration temperatures can be maintained only if the overall amount of soot accumulated in the filter PM-CAT is equal to 1/5 of the soot accumulated in a DPF filter. This derives also from the fact that, while the regeneration of the DPF filters is possible with an overall amount of carbon residue equal to about 7-8g per litre, the PM-CAT filters have to regenerate when the amount of the residue does not exceeds 3-4 g/litre, otherwise the temperature may exceed the limit of 900°C. In addition, it should be considered that the average volume of PM-CAT filters is 2-3 times smaller than the DPF filters, with the purpose to accelerate the exhaust gas flow and thus to facilitate the settlement of the particulate matter in the alveoli.

Thus its active regeneration should be five times more frequent, the particulate matter accumulation in the filter being the same.

The same conclusions are obtained considering the problem of the blow-off. The particulate matter accumulation in PM-CAT and DPF filters being equal, the regeneration of the PM-CAT filters should be five times more frequent than the one of the DPF filters, in order to avoid that the particulate matter is released in the environment during sudden accelerations.

This is not acceptable, since the fuel post-injection during the regeneration cycles provokes a decay of the lubricating oil of the engine. Thus the maintenance intervals of the engine would be intolerably shortened.

The technique known in the art to avoid natural second type reactions is limited to the conception of diagnostic kits in order to monitor the saturation level of the PM-CAT filter and avoid fire risks, without departing from the off-road field. On the contrary, according to the present invention, active regenerations of the second type are facilitated.

According to a first embodiment of the present invention, the management of the regeneration of the PM-CAT filter is performed on the basis of a predictive estimation of the saturation level of the filter.

Advantageously, a predictive estimation of the accumulation of particulate matter avoids to reach particulate levels that may bring to an uncontrollable second type regeneration, both passive and active.

The predictive estimation is known in the field of DPF filters, but, if it was used as it is in the field of PM-CAT filters, it would be inadequate, since it would bring to an estimation of soot accumulation such that the regeneration should be five times more frequent than in the DPF filters. The estimator of the saturation level of the filter is based on:
- a first model of the grade of smoke of the heat engine, in order to estimate a first amount of particulate matter produced by the heat engine as a function of the operating conditions of the engine itself, such model can be obtained experimentally,
- a second model of the efficiency of the promotion of the first type reaction, in order to estimate a second amount of particulate converted into CO/CO₂, namely by a reaction based on the reduction of NO₂ into NO, preferably within an interval of temperatures comprised between 220°C and 450°C;
- a third model of the efficiency of the promotion of the second type reaction, in order to estimate a second amount of particulate naturally converted into CO/CO₂, namely by a natural reaction based on the reduction of O₂ during the functioning of the heat engine, which brings the ATS within an interval of temperatures comprised between 550°C and 650°C.

It is clear that the first amount of particulate matter gives an additional contribution, by settling in the alveoli of the PM-CAT filter, while the other two are subtracted from the first one. In general, the first amount is higher than the absolute value of the sum of the other two, above all when the engine operates in low power conditions, namely when the exhaust line does not reach a temperature that is high enough to allow a natural reaction of the first type. For such reason, the present invention teaches how to apply the active regeneration to the PM-CAT filter.

According to laboratory tests on specific intervals of temperature, (220 - 450°C), PM-CAT filters have proven to be more efficient than DPF filters in the promotion of first type reactions having a coefficient comprised between 1.6 and 2.

Thus, according to the present invention, the predictive estimation, in particular the second model, is modified in order to take into account the higher efficiency of the PM-CAT filters with respect to the DPF filters in promoting the reaction of the first type. Thus, said second amount, with respect to a DPF filter, is multiplied by a coefficient comprised between 1.6 and 2. Such coefficient represents a ratio between the efficiency of the PM-CAT filter and of the DPF filter in promoting the natural regeneration of the first type.

Since, in the field of passive regenerations, the reaction of the first type is predominant, the higher efficiency of the PM-CAT filter in promoting the reactions of the first type has to be taken into account and implies a reduction of the aforementioned estimation of the regeneration frequency, namely 5/1.8≈ 2.8, considering 1.8 as the mean value.

The fact that the ratio between the regeneration frequency of the PM-CAT filter and of the DPF filter is found to be equal to 2.8 discourages the use of PM-CAT filter together with a regeneration process.

As a result of the modification introduced to the estimator, further destructive tests have shown a lower level of saturation than predictively estimated. This appeared as inexplicable. Until the reasons of such behaviour of PM-CAT filters could not be explained scientifically, it would not be possible to introduce adequate changes to the estimator. Also considering that it is not possible to have a corrective diagnosis based on the measurement of a differential pressure between the input and the output of the filter, as it is possible for the DPF filters, since the PM-CAT filter is of the open type.

After months of tests, it has been understood that the reason of such anomalous behaviour is connected to the intrinsic characteristics of PM-CAT filters, which filtrate only 50% - 90% of the particulate produced by the heat engine. Thus, according to the present invention, the first model of the grade of smoke, which depends only on the characteristics of the heat engine, was weighted with a coefficient comprised between 0.5 and 0.9, namely equal to the filtration/capture/retention efficiency of the particulate matter filter.

Now it is possible to understand that the frequency of regeneration of a PM-CAT filter that has to function in the same conditions as a DPF filter is reduced to 2.8 * 0.7 ≈ 1.96, considering 0.7 as the mean value.

Further tests have validated the solution identified above.

The fact that the regeneration frequency is doubled when using a PM-CAT filter can be tolerated, considering the saving due to the cost of the filter itself. Thus, after having understood the aforementioned aspects, it has been possible to consider the use of PM-CAT filters in combination with the active regeneration processes.

Furthermore a setting of the fuel supply system of the engine has been performed. Thus the maps injection/grade of smoke were improved. Such operation is known as useless in the field of DPF filters, since they filtrate 100% of the particulate matter. Such operation can be performed on any engine, obtaining a reduction of about 40% - 60% of the particulate matter produced by the engine.

Thus, the frequency of regeneration of the PM-CAT filter may be further reduced to 1.96 * 0.5 ≈ 0.98, considering 0.5 as the mean value.

In other words, it has been shown that it is possible to use a PM-CAT filter with the same operating conditions as a DPF filter, and that the frequency of regeneration of the PM-CAT filter is comparable with the one of the DPF filter, overcoming a technical prejudice that lasted many years. According to the present invention, in order to avoid that the temperatures reached in the PM-CAT filter may become too high, due to the fuel post-injection, a first temperature sensor T1 is provided between the DOC and the PM-CAT. In this way the temperature is constantly monitored in order to avoid that it exceeds 650°C, which usually happens during the regeneration of the DPF filters.

During the experimentation further problems have arisen. During the procedures of regeneration, PM-CAT filters, unlike DPF filters, allow the passage of unburnt hydrocarbons, since the PM-CAT filter does not have any superficial treatment with noble metals (platinum, palladium, etc.) that can remove/convert the HC.

According to the present invention, such problem has been solved by increasing the temperature at the DOC to a minimum value of 500°C and to an optimal value of 550°C. To that end, in order to control the process in an adequate way, the second temperature sensor T2 arranged upstream of the DOC and the first temperature sensor T1 arranged between the DOC and the PM-CAT allow to monitor in detail the regeneration process.

The temperature control strategy just upstream the PM-CAT, namely by means of T1, allows to ensure a temperature of about 600 +/-50°C in the PM-CAT, which is lower than the regeneration temperature of the DPF.

It is possible to estimate the temperatures reached in the PM-CAT filter in a predictive way, as a function of the particulate matter accumulated in the PM-CAT filter and of an amount of post-injected fuel. The sensors mentioned above, T1, T2, allow to give a feedback to the control, optimizing and stabilizing the process.

Always according to the present invention, such optimal interval of temperatures is reached by enriching the mixture, namely by lowering the lambda which represents the stoichiometric ratio between air and fuel.

As it is known, the lambda varies in relation to the power/torque required to the engine, but the enriching that is necessary to promote the reaction, preferably of the second type, since it is more rapid, combined with the normal decrease of the lambda may result as intolerable, since the remarkable grade of smoke of the engine, above all when the power requests exceed 40% of the maximum power, induces the system to release particulate matter beyond the admissible limits. This happens because the PM-CAT filter is an open filter.

Although it is very difficult that such phenomenon occurs during a type-approval cycle, such problem has been considered.

According to a first alternative embodiment of the present invention, during the regeneration of the PM-CAT filter, maps of fuel supply/grade of smoke, different from the ones of the normal operating conditions of the vehicle, have been used in order to give a lower limit to lambda corresponding to values between 1.5 and 1.1.

According to another alternative embodiment of the present invention, during the regeneration process of the PM-CAT filter, the fuel supply map is unchanged until a remarkable torque/power is required, namely exceeding a preset threshold, for example 50% of the maximum power. Beyond such threshold, a device limiting the enrichment intervenes, namely a limiting device which avoids that the lambda goes below the aforementioned values.

In relation to said second alternative embodiment, the enrichment curve is smoothed, according to any law, for example in the lambda interval between 1.5 and 1.1, wherein the lower limit, 1.1, cannot be passed. A logical filter-saturator, for example, may be used in order to avoid the enrichments to exceed 1.1 - intended as a lower limit - and possibly to level the progression of the enrichment in the interval between 1.5 and 1.1, wherein 1.1 is the lower limit. These alternative embodiments have in common the use of limiting means which act in proportion to the torque/power request to the heat engine, both modifying the maps in real time and commuting to further pre-stored maps.

The intervals of intervention of the limiting means may be varied according to the characteristics of the engine, to the presence of the supercharging, etc..

An interval of intervention of the limiting device around lambda=1.3, with a range for example of +/-0.2, can be considered as reasonable.

Thus the maximum effect of the enrichment of the mixture in order to heat the catalyst DOC occurs when a low torque/power is required, while such effect is reduced as the required power increases, namely as a function proportional to the delivered torque/power.

Thus it is possible to regenerate a filter unable to retain all the particulate matter, namely an open filter, unlike the DPF, and it is possible to ensure a reasonable functionality of the engine, without releasing too much particulate matter in the environment.

The solutions shown so far can be applied not only in the field of the PM-CAT filters, but also in the field of the regeneration of any particulate filter that is unable to remove/burn all the unburnt hydrocarbons and to retain all the particulate matter during the regeneration of the filter itself.

Thanks to the present invention, a PM-CAT filter can be used as an alternative to a DPF filter in the field of the DPF filter usage.

On the contrary, if the present invention is used in the field of the off-road vehicles, the service life of the PM-CAT filter can be extended extraordinarily and the use of the vehicle can be also very different from the usage curves of the type-approval cycles. An optimal behaviour of the system can be guaranteed regardless of its usage.

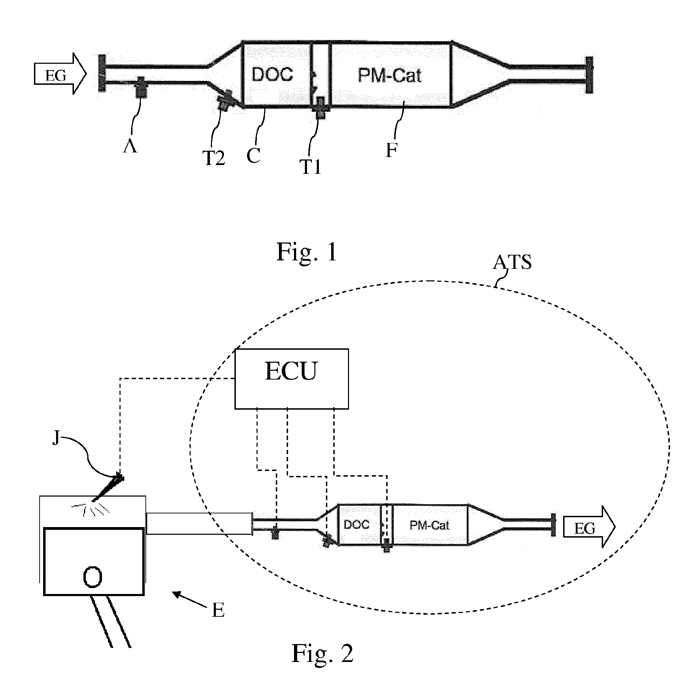

The present invention, with particular reference to the management of the fuel supply of the engine connected to the filter regeneration, may be implemented by a specific electronic hardware communicating with the control unit ECU, or such management can be carried out to the control unit ECU itself, appropriately programmed. The same is true for the estimator of the saturation level of the filter, for the system for controlling and monitoring the temperature of the DOC and for the limiting device of the mixture enrichment. Figure 1 shows a schematic view of a portion of the ATS system that is object of the present invention, comprising a catalyst C and a particulate filter F with a first temperature sensor placed between the catalyst and the filter.

A second temperature sensor T2 is placed upstream of the catalyst C and a lambda sensor is placed upstream the second temperature sensor T2.

Figure 2 shows an overall schematic view of the ATS system interacting with an internal combustion engine E. The estimator is integrated in the ECU which is connected to the aforementioned sensors T1, T2, lambda and which controls the injection and the post-injection of the fuel by means of the injectors J in the cylinder chambers of the internal combustion engine E.

From the description set forth above it will be possible for the person skilled in the art to embody the invention with no need of describing further construction details. The elements and the characteristics described in the different preferred embodiments may be combined without departing from the scope of the present application.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

## Claims

1. Exhaust gas treatment system (ATS) for internal combustion engine, the system being based on an open particulate filter (F), the treatment system comprising a catalyst (C) of the DOC type upstream of the filter (F) according to a direction of the exhaust gas outflow (EG) and means for controlling the injection (ECU) in order to control a predetermined stoichiometric ratio (lambda) of air/fuel supply to the engine, and **characterized in that** said injection control means (ECU) comprise
- means for promoting an enrichment of said stoichiometric ratio in order to cause an active regeneration of the particulate filter and
- means for limiting said enrichment, during said active regeneration procedure, acting as a function of the power/torque required to the internal combustion engine.

2. System according to claim 1, wherein said injection control means are suitable to activate first injection maps during a normal operating condition and wherein said limiting means are suitable to activate second injection maps, leaner than the first ones, during an active regeneration procedure of the particulate filter.

3. System according to claim 2, wherein said activation means of said second maps are suitable to activate said second maps when a power request exceeds a predetermined threshold.

4. System according to claim 1, wherein said limiting means comprise a logical filter-saturator suitable to prevent that said stoichiometric ratio exceeds a predetermined value.

5. System according to claim 4, wherein said logical saturator-filter is suitable to level an enrichment progression in an interval of values, having said predetermined value as lower limit.

6. System according to one of the claims 4 or 5, wherein said predetermined value is 1.1.

7. System according to one of the claims 4 or 6, wherein said interval of values is comprised between 1.5 and 1.1.

8. Exhaust gas treatment system (ATS) for internal combustion engine equipped with
- an open particulate filter (F) and
- a catalyst of the DOC type placed upstream of the filter (F) according to a direction of the exhaust gas outflow (EG) and with
- injection control means (ECU) in order to control an engine fuel supply according to a stoichiometric ratio air/fuel (lambda),
the method being **characterized in that** it comprises:
a step (i) of active regeneration of the filter (F) comprising an enrichment of said stoichiometric ratio and
a step (ii) of limitation of said enrichment, during said active regeneration procedure, as a function of the power/torque required to the internal combustion engine.

9. Method according to claim 8, wherein injection control means are suitable to activate first injection maps during a normal operating condition and wherein said step (11) limiting said enrichment comprises a step (iii) of activation of second injection maps, leaner than the first ones, during an active regeneration procedure of the particulate filter.

10. Method according to claim 9, wherein said step (iii) of activation of said second maps is performed when a power request exceeds a predetermined threshold.

11. Method according to claim 8, wherein said step of limitation of said enrichment comprises (iv) a filtering by means of a logical saturator suitable to prevent that said stoichiometric ratio exceeds a predetermined value.

12. Method according to claim 11, wherein said logical saturator-filter levels an enrichment progression in an interval of values, having said predetermined value as lower limit.

13. Method according to one of the claims 11 or 12, wherein said predetermined value is 1.1.

14. Method according to one of the claims from 11 to 13, wherein said interval of values is comprised between 1.5 and 1.1.

15. Computer program comprising program code means suitable for performing the steps (i - iv) of any claim from 8 to 14, when such program is run on a computer.

16. Computer-readable means comprising a recorded program, said computer-readable means comprising program code means suitable for performing the steps (i - iv) according to the claims from 8 to 14, when said program is run on a computer.

17. Internal combustion engine comprising an exhaust gas treatment system (ATS) according to one of the claims from 1 to 7.

18. Vehicle comprising an internal combustion engine according to claim 17.
